# EUROPEAN PATENT APPLICATION

(11) **EP 4 799 993 A1**
(43) Date of publication of application: **02.09.2026**
(21) Application number: 25160963.2
(22) Date of filing: 28.02.2025
(51) Int. Cl.: C04B 28/04, E01C 11/26, E01F 15/12

(54) **THERMALLY CONDUCTIVE CEMENTITIOUS COMPOSITION**

(71) Applicant: Sika Technology AG, 6340 Baar (CH)
(72) Inventor: NEKKANTI, Haripriya, Lyndhurst, 07071 (US); BOON, Gary, Lyndhurst, 07071 (US)
(74) Representative: Sika Patent Attorneys

(57) **Abstract**

The present invention relates to a dry cementitious composition, especially a thermally conductive dry cementitious composition, comprising at least one type of metal powder and at least one type of carbonaceous particles, especially wherein the metal powder is iron powder, and wherein the carbonaceous particle is carbon fiber and/ or graphene oxide.

## Description

### Technical field

The present invention relates to a dry cementitious composition, especially a thermally conductive dry cementitious composition, comprising at least one type of metal powder and at least one type of carbonaceous particles.

### Background art

Conventional cementitious compositions, such as cement-based mortars or concretes, typically exhibit moderate thermal conductivity due to their porous structure, which limits heat transfer and contributes to their role as thermal insulators. This can be a disadvantage in applications requiring efficient heat dissipation.

To address this, thermally conductive cementitious compositions have been modified to enhance heat transfer through the inclusion of thermally conductive fillers, such as metal or carbon-based additives. These specialized compositions are of high interest in applications like energy-efficient building design, surface heating solutions or heating systems for ice and snow melting of road and pavement infrastructure. Notable applications include driveways, patios, outdoor decks, exterior steps, staircases, parking lots, bridge decks, and overpasses, particularly in areas subjected to heavy snowfall and low temperatures.

The fundamental principle behind thermally conductive cementitious compositions lies in the integration of conductive additives, such as metal or carbon-based fillers, into the binder matrix. These fillers establish a conductive network that enhances heat transfer primarily through conduction, where thermal energy is transferred between particles. When heat, such as that from solar radiation, is applied, it generates vibrations in the filler particles, which can transfer energy to adjacent particles in the matrix, facilitating heat conduction through solid-state interactions. The overall structure of the filler network enables more efficient thermal energy movement compared to standard concrete.

In this regard, US10611685B2 (A. J. Morano Rodriquez and J. Pous de la Flor) describes a powder formulation that allows to obtain concrete and mortar with improved thermal conductivity. The formulation consists of, inter alia, calcareous or siliceous aggregate, pozzolanic material, graphite, graphene and/ or carbon nanotubes. It is intended for use in the construction sector, particularly in enhancing the efficiency and sustainability of buildings with thermally and/ or geothermally activated structures.

Likewise, KR102611229B1 (Dongseo Co., Ltd.) teaches about a thermally conductive mortar composition for emergency road repair, comprising 34 - 49 wt. % of silicon carbide.

Furthermore, CN103435293A (Chang'an University) discloses a thermally conductive organic binder composition, obtained by modifying asphalt cement with fine silicon carbide powder to produce a thermally conductive asphalt binder. This binder is subsequently mixed with aggregate and mineral powder to form a thermally conductive asphalt concrete, designed for melting ice and snow on pavements in cold regions.

However, there is still a need for thermally conductive cementitious compositions, especially for cementitious compositions having a high compressive strength, suitable to be used in particular in road and pavement infrastructure subjected to freezing and snowing.

### Summary of the invention

It is an object of the present invention to provide improved solutions for thermally conductive cementitious composition. Preferably, the present invention provides a dry cementitious composition of improved thermal conductivity and/ or compressive strength.

Surprisingly, it was found that these objects can be achieved with the composition according to claim 1. It is thus at the core of the present invention to add at least one type of metal powder and at least one type of carbonaceous particles to a dry cementitious composition to improve thermal conductivity of said cementitious composition in a cured state. In this context, "improvement" refers to an increase of the thermal conductivity observed in a cured cementitious composition when at least one type of metal powder and at least one type of carbonaceous particles are added in comparison to the same composition without the addition of said powder and said particles.

Particularly preferred is an inventive combination of iron powder as a metal powder and carbon fiber and/ or graphene oxide as carbonaceous particles. This inventive combination results in a synergistic interaction between the metal and carbonaceous components, thereby providing improved thermal conductivity without a detrimental effect on compressive strength.

Further aspects of the present invention are subject of further independent claims. Preferred embodiments are the subject of the dependent claims.

### Ways of carrying out the invention

In a first aspect the present invention relates to a dry cementitious composition, especially a thermally conductive cementitious composition, comprising at least one type of metal powder and at least one type of carbonaceous particles.

A cementitious composition as used herein refers to materials that comprise at least one cementitious binder. A cementitious binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime).

Particular preference is given to a cement having a cement clinker content of ≥ 35 wt. %. In particular, the cement is of the type CEM I, II, III, IV or V (according to the standard EN 197-1:2011) or one of the cement type I, IA, II, IIA, II(MH), II(MH)A, III, IIIA, IV or V (according to the standard ASTM C150/C150M-22). A proportion of the hydraulic binder in the total cementitious binder is advantageously at least 5 wt. %, in particular at least 20 wt. %, preferably at least 35 wt. %, especially at least 65 wt. %. In a further advantageous embodiment, the cementitious binder consists to an extent of at least 95 wt. % of a hydraulic binder, in particular cement clinker.

In a particularly preferred embodiment, the cementitious composition of the present invention comprises at least Ordinary Portland Cement (OPC) as a cementitious binder. According to embodiments, the content of OPC in a cementitious composition of the present invention is in the range of 4 - 75 wt. % preferably 26 - 75 wt. %, especially 30 - 66 wt. %, in each case relative to the total dry weight of the cementitious composition.

It is further possible, in a cementitious composition of the present invention, to use special cements, such as calcium sulfoaluminate cement, calcium aluminate cement, or mixtures thereof in addition to the OPC.

According to certain embodiments, the OPC is a CEM I under standard DIN 197-1:2011. However, other OPC classified, for example, under the relevant ASTM, JIS or Chinese standards is also suitable. According to preferred embodiments, the cementitious binder, especially the OPC, has a low content of tricalcium aluminate (C3A). A low content means that the content of C3A in the cementitious binder of the present invention preferably is <10 wt. %, more preferably <5 wt. %, each based on the total dry weight of the cementitious binder.

In one advantageous embodiment, a suitable cementitious binder consists of Ordinary Portland Cement.

According to further embodiments, the cementitious binder comprises other binders in addition to or instead of a hydraulic binder. These are, in particular, latent hydraulic binders and/ or pozzolanic binders. Suitable latent hydraulic and/ or pozzolanic binders are, for example, slag, fly ash, silica dust, silica fume, rice husk shale, burnt shale, trass, and pumice. In an advantageous embodiment, the cementitious binder contains 5-95 wt. %, in particular 5-65 wt. %, especially 15-35 wt. %, of latent hydraulic and/or pozzolanic binders, relative to the total dry weight of the cementitious binder.

According to some embodiments, the said cementitious binder comprises at least one hydraulic binder, at least one latent hydraulic and/or pozzolanic binders and clays, especially calcinated clays.

According to preferable embodiment, the said cementitious binder comprises cement and at least one latent hydraulic binder.

According to another preferable embodiment, the said cementitious binder comprises cement and at least one pozzolanic binder.

According to yet another preferable embodiment, the said cementitious binder comprises cement and at least one nonhydraulic binder.

The cementitious binder may also be based on calcium sulfate and/or lime as a binder. Calcium sulfate is meant to encompass any of anhydrite, alpha- and beta-calcium sulfate hemihydrate, and calcium sulfate dihydrate. Lime is meant to encompass any of hydraulic lime, air lime, and natural hydraulic lime.

A cementitious composition of the present invention may also comprise further ingredients. Preferably, such further ingredients are selected from at least one of aggregates, fillers and additives.

The term aggregate as used in the context of the present invention refers to mineral materials that are non-reactive in the hydration reaction of cementitious binders. Aggregates can be any aggregates typically used for cementitious materials such as concrete, mortars, screeds, renders, grouts, coatings, putties or the like. Typical aggregates are for example rock, crushed stone, gravel, slag, limestone, sand, recycled concrete, perlite or vermiculite.

According to preferred embodiments, the aggregates are selected from at least one of limestone, granite, basalt, olivine, aluminum oxide, sand or a combination thereof, preferably sand.

A cementitious composition of the present invention may comprise 15 - 85 wt.-%, preferably 20 - 70 wt.-%, especially 30 - 70 wt.-%, in each case relative to the total dry weight of the cementitious composition, of at least one aggregate.

According to embodiments, aggregates having a grain size as determined by sieve analysis according to EN 12192-1:2002 or EN 933-1:2012 in the range of 0.036 mm to 7 mm, preferably 0.1 mm to 6 mm, more preferably 0.1 mm to 3 mm are used in a cementitious composition of the present invention.

According to a particularly preferred embodiment, at least one aggregate comprises or consists of sand. Sand is a naturally occurring granular material composed of finely divided rock or mineral particles. It is available in various forms and sizes. Especially, at least one aggregate consist of sand, in particular quartz sand, river sand, manufactured sand, for example from granite or limestone, or mixtures thereof. Suitable sands are described in standards ASTM C778-21 or EN 196-1:2016.

Fillers within the present context, are mineral additions of low particle size that have no cementitious properties. Typical fillers are finely ground calcium carbonates, silica flour, microsilica.

Additives can be any typically used in the concrete or mortar industry. Typical additives include plasticizers, thickeners, retarders, air-entrainers, de-aerating agents, defoamers, corrosion inhibitors, fibers, synthetic organic polymers, expansion producing additives, pigments, strength enhancers, waterproofing additives, alkali-aggregate reaction inhibitors, chromate reducers, and/or antimicrobial agents.

The term "thermally conductive", within the present context, refers to a dry cementitious composition with a thermal conductivity of at least 2.3 W/m.K, preferably at least 2.4 W/m.K, as measured by the method outlined in the experimental section after 28 days.

According to embodiments, the metal powder is selected from iron powder, aluminum powder, copper powder, nickel powder and/ or zinc powder.

Iron powder, within the present context, refers to finely divided particles of iron. Iron powder typically exhibits high thermal conductivity, good compressive strength, and magnetic properties. It is produced through methods like atomization of molten iron, reduction of iron ore, or milling of solid iron, which control its particle size and shape.

According to preferred embodiments, iron powder is produced from steel shavings. Steel shavings are small, thin fragments of steel that are generated as a byproduct during metal machining, grinding, or cutting processes. These shavings retain a high iron content, typically between 95-98%, depending on the type and grade of steel. Collected steel shavings can be further processed into iron powder through mechanical milling, where they are refined and pulverized. This high-iron powder is valuable in applications like powder metallurgy and thermal conductivity improvements, effectively repurposing waste materials from metalworking industries.

According to preferred embodiments, iron powder has a purity of at least 95%, preferably at least 98%, most preferably of at least 99%.

According to further embodiments, aluminum, copper, nickel, and zinc powders, either separately or in a combination, can be used as metal powders in the cementitious composition. The particle size of these powders typically ranges from 10 to 100 µm. Copper powder exhibits the highest thermal conductivity, making it particularly effective for applications that require efficient heat transfer. Aluminum powder also significantly enhances thermal performance, while nickel and zinc powders, although less conductive, provide additional benefits such as corrosion resistance and structural integrity.

According to embodiments, the carbonaceous particles are selected from graphene, graphite, graphene oxide, carbon fibers, carbon black, expanded graphite and/ or activated carbon.

Within the present context, the term "particles" refers to solids having an average particle size of less than 1000 µm, preferably less than 500 µm, most preferably less than 100 µm. The particle size and the distribution thereof can be determined, in particular, by laser light scattering, preferably in accordance with the standard ISO 13320:2009. In context of carbon fibers, the term "particle size" refers to the outer diameter, not the length of the fiber.

Carbonaceous particles of such dimensions have proven to be beneficial for the present invention, especially in combination with the metal powder.

Graphene oxide, within the present context, is a chemically modified monolayer form of graphene with oxygen-containing functional groups such as hydroxyl, epoxy, carbonyl, and carboxyl. Unlike graphene, which consists of fully hydrogenated graphene layers, graphene oxide has a disrupted carbon network lattice due to the presence of oxygen groups. This disruption gives graphene oxide distinct properties, including lower thermal conductivity and enhanced chemical reactivity, which differentiate it from other graphene derivatives. The main factor influencing the thermal conductivity of graphene oxide is the amount of functional groups present (degree of oxidation). According to preferable embodiments, the C/O ratio in graphene oxide is less than 3.

The term "carbon fibers", within the present context, refers to solid strands of carbon atoms. In particular, carbon fibers are made of layers of graphite sheets stacked parallel to one another. Thus, although based on the same atom type, i.e. carbon, carbon fibers are structurally very different from carbon nanotubes. Usually, individual carbon fibers have an outer diameter of about 5 to 15 µm. The outer diameter of carbon fibers can be measured using scanning electron microscopy (SEM) or optical microscopy, which allows for high-resolution imaging of the fibers, facilitating precise measurement of their thickness. Another possibility to measure the outer diameter is an optical absorption method in line with the standard ISO/TS 10868:2017.

A specific surface area of carbon fibers is preferably at least 50 m²/g, particularly at least 100 m²/g, even more preferably at least 500 m²/g or higher, depending on the type and processing method. This specific surface area can be determined using BET surface area analysis with nitrogen gas, a conventional method recognized by those skilled in the art.

Carbon fibers have demonstrated significant effectiveness in enhancing the thermal conductivity of cementitious compositions when combined with metal powders and, optionally, additional carbonaceous particles, while also preserving the compressive strength of the final composition.

According to embodiments, the metal powder is iron powder and the carbonaceous particle is carbon fiber and/ or graphene oxide.

According to preferred embodiments, the metal powder is iron powder and the carbonaceous particle is carbon fiber.

According to preferred embodiments, the metal powder is iron powder and the carbonaceous particle is graphene oxide.

According to preferred embodiments, the metal powder is iron powder and the carbonaceous particle is carbon fiber and graphene oxide.

According to embodiments, the metal powder is present in the amount between 1.5 and 5 wt. %, preferably between 2.5 and 5 wt. %, especially between 4 and 5 wt. %, relative to the total weight of the cementitious composition.

According to embodiments, the carbonaceous particle is present in the amount between 0.03 and 2.5 wt. %, preferably between 0.03 and 1.5 wt. %, especially between 0.03 and 0.2 wt. %, relative to the total weight of the cementitious composition.

According to preferred embodiments, the metal powder is present in amount between 1.5 and 5 wt. % and the carbonaceous particle is present in the amount between 0.03 and 1.5 wt. %, relative to the total weight of the cementitious composition.

According to preferred embodiments, the metal powder is present in amount between 1.5 and 5 wt. % and the carbonaceous particle is present in the amount between 0.03 and 0.2 wt. %, relative to the total weight of the cementitious composition.

According to preferred embodiments, the metal powder is present in amount between 2.5 and 5 wt. % and the carbonaceous particle is present in the amount between 0.03 and 2.5 wt. %, relative to the total weight of the cementitious composition.

According to preferred embodiments, the metal powder is present in amount between 4 and 5 wt. % and the carbonaceous particle is present in the amount between 0.03 and 2.5 wt. %, relative to the total weight of the cementitious composition.

According to embodiments, the metal powder has a BET surface area in the range of 0.1 - 5 m²/g, preferably 0.1 - 3 m²/g, more preferably 0.1 - 2 m²/g, measured according to the standard ISO 9277:2022.

A higher BET surface area typically corresponds to a smaller particle size, resulting in an increased number of contact points between particles. Thus, a heat transfer through the metal powder is facilitated, enhancing thermal conductivity of the cementitious composition. However, when the BET surface area becomes excessively high, increased phonon scattering at the particle interfaces may occur, which can negatively impact thermal conductivity. Thus, the optimization of the BET surface area of iron powder is essential for achieving a balance between enhanced particle contact and minimized scattering effects.

According to embodiments, the carbonaceous particles are carbon fibers with a length between 1 and 14 mm, preferably between 6 - 12 mm.

The length of carbon fibers can be measured using image analysis techniques or laser-based methods. For image analysis, fibers are dispersed on a surface, and their lengths are measured using high-resolution imaging combined with software to assess fiber dimensions. Alternatively, laser diffraction or light scattering methods can be applied to determine fiber length distribution, especially in applications where automated measurement of large quantities is needed.

According to preferred embodiments, an average aspect ratio of the length to diameter of the carbon fibers is at least 100, preferably at least 1000, more preferably least 2500, most preferably at least 3000.

In a different aspect, the present invention relates to a wet cementitious composition obtained by mixing the dry cementitious composition described above with water, wherein water is present in an amount ranging from 5 to 50 wt. %, preferably from 5 to 40 wt. %, most preferably from 5 to 30 wt. %, in each case relative to the total weight of the cementitious composition.

According to embodiments, a weight ratio of water to cementitious binder is in the wet cementitious composition of the present invention is between 0.15 - 0.6.

Methods and devices for mixing a dry cementitious composition with water are known to the person skilled in the art. It is for example possible to mix dry cementitious composition with water by means of hand held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuously, semi-continuously or batch-wise. Continuous mixing offers the advantage of a high production speed.

In another aspect, the present invention relates to a hardened body obtainable by hardening the wet cementitious composition described above.

In another aspect, the present invention relates to a structure comprising the hardened body described above and an electric heating mat, preferably an electric heating mat with a thermostatic control, said heating mat being placed on the hardened body.

If a thermal mat is used in combination with said hardened body, heating efficiency can be improved, thereby reducing electricity consumption. Alternatively, a smaller heating mat can effectively warm a larger area, making the solution more energy-efficient and cost-effective.

All features and embodiments as described above, also apply to this aspect.

In another aspect the present invention relates to a method of increasing thermal conductivity of a cured cementitious material, said method comprising the steps of
(i) providing a dry cementitious composition,
(ii) adding at least one type of metal powder and at least one type of carbonaceous particles to the dry cementitious composition, and
(iii) curing the mix obtained in step (ii) by the addition of water to obtain a cured cementitious material.

The simultaneous use of at least one metal powder and at least one type of carbonaceous particles surprisingly produces a synergistic effect, enhancing both thermal conductivity and compressive strength.

Especially preferable is a method described above, wherein the metal powder is iron powder and the carbonaceous particle is carbon fiber and/ or graphene oxide.

According to embodiments, the cured cementitious material forms a driveway, a pavement, a patio, an outdoor deck, exterior steps, an exterior staircase, an exterior parking lot, a bridge deck, an overpass and/ or indoor flooring.

According to preferred embodiments, a driveway produced according to the method of the present invention demonstrates improved thermal conductivity while maintaining optimal compressive strength. In the present context, the term "improved thermal conductivity" refers to a thermal conductivity that is higher than that of a cured cementitious material produced without the addition of at least one metal powder and at least one type of carbonaceous particles as specified by this invention. Furthermore, within the present context, the term "optimal compressive strength" refers to a compressive strength that is either higher than or comparable with similar compositions lacking enhanced thermal conductivity. As a result, the driveway warms more quickly under exposure to solar radiation, facilitating faster melting of snow and ice compared to a driveway not produced according to the present invention. This characteristic offers a practical advantage in cold climates by reducing snow and ice accumulation, enhancing safety, and decreasing maintenance needs.

According to further preferable embodiments, a pavement, a patio, an outdoor deck, exterior steps, an exterior staircase, an exterior parking lot, a bridge deck and/ or an overpass produced according to the present invention demonstrate the same properties as the driveway described above.

According to preferred embodiments, the cementitious material is an indoor flooring.

According to especially preferred embodiments, the indoor flooring comprises a layer of a dry shake, which is a dry cementitious composition according to the present invention.

Dry shake, within the present context, is a dry cementitious composition comprising cement, aggregates and additives, that is applied to the surface of freshly poured concrete before it sets. The dry shake enhances durability and strength of concrete floors by providing a hardened surface that is resistant to wear and environmental factors. According to the present invention, the dry shake formulation is a dry cementitious composition as described above comprising at least one type of metal powder and at least one type of carbonaceous particles. Such dry shake is characterized by improved antistatic properties that effectively mitigate the accumulation of static electricity on the floor, thereby reducing the risk of accidents and ensuring a safer working environment. The indoor flooring comprising dry shake of the present invention not only improves safety but also contributes to the overall durability and functionality of the flooring system.

According to embodiments, a compressive strength of the cementitious material measured at 28 days is at least 13.5 MPa, preferably at least 14.0 MPa, measured according to ASTM C109/C109M-20 standard.

All features and embodiments as described above, also apply to this aspect.

### Exemplary embodiments

### Mortar mixtures

To produce the dry mortar mixtures, the raw materials listed in Table 1 were combined in the specified proportions indicated in Table 2.

The dry mortar mixtures were then mixed in a Hobart mixer with water (w/c = 0.09) and cured in the form of cubic specimens (each dimension equal 50 mm) to obtain hardened mortar samples.

**Table 1: Raw materials**

| **Raw material** | **Description** |
|---|---|
| Cement | Type 1-L cement (Portland Limestone Cement) |
| Iron powder | 99% purity |
| Carbon fiber | Chopped carbon fiber, 12 mm length |
| Graphene oxide | D10: 6.99 µm; D50: 12.0 µm; D90: 19.5 µm; electrical conductivity 80 ± 20 S/m |
| Sand | Quartz sand, washed, natural, 0.1 - 3 mm |

**Table 2: Tested specimens (all amount in wt. %, relative to dry mortar composition; references are not according to the present invention)**

| **Example** | **Ref-1** | **Ref-2** | **A-1** | **A-2** | **A-3** |
|---|---|---|---|---|---|
| Cement | 16.44 | 18 | 18 | 18 | 18 |
| Iron powder | - | - | 4.5 | 4.5 | 4.5 |
| Carbon fiber | - | 4.5 | - | 0.05 | 0.05 |
| Graphene oxide | - | 0.1 | 0.1 | - | 0.1 |
| Sand | 83.56 | 77.4 | 77.4 | 77.45 | 77.35 |

### Thermal conductivity test

The thermal conductivity measurements were conducted using the Thermtest Measurement Platform-2 (MP-2) equipped with a TLS 50mm sensor, both manufactured by Thermtest (Hanwell, Canada). The TLS 50mm sensor complies with ASTM D5334-22. During the measurement, the sensor wire is heated with a constant current source, and the temperature increase is recorded by a resistance temperature detector device (TLS sensor). In samples with higher thermal conductivity, the resistance rises more gradually, while in samples with lower thermal conductivity, it increases more rapidly.

For each test, a hole was drilled into each concrete sample, and the TLS 50mm sensor, coated with thermal paste for optimal contact, was inserted into the mortar sample.

The temperature values were recorded over time and plotted against the natural logarithm of time. The slopes of these curves were then calculated and applied to Eq. 1 to determine the thermal conductivity (λ). $λ = \frac{q}{4 πa}$ wherein:
λ - thermal conductivity,
q - heating power,
a - slope.

### Compressive strength test

The compressive strength was tested according to ASTM C109/C109M-20 after the time indicated in below Table 3.

**Table 3: Results of testing mortar specimens. Example Ref-1 and Ref-2 (not inventive) and A-1 to A-3 (inventive).**

| **Example** | **Ref-1** | **Ref-2** | **A-1** | **A-2** | **A-3** |
|---|---|---|---|---|---|
| Conductivity @ 1d [W/m.K] | 1.917 | 2.069 | 2.572 | 2.253 | n/a |
| Conductivity @ 28d [W/m.K] | 2.164 | 2.187 | 2.315 | 2.431 | 2.391 |
| Compressive strength @ 1d [MPa] | 5.5 | 5.7 | 6.9 | n/a | 6.5 |
| Compressive strength @ 28d [MPa] | 13.7 | 8.8 | 14.3 | 14.5 | 13.6 |

| | | | | | |
|---|---|---|---|---|---|
| n/a - not measured | | | | | |

Surprisingly, the combined use of at least one metal powder and at least one type of carbonaceous particles produces a synergistic effect on both thermal conductivity and compressive strength (cf. Ref-1 and Ref-2 with A-1 to A-3). In contrast, when only two different carbonaceous particles are combined without any metal powder, the compressive strength measured at 28 days significantly decreases (cf. Ref-2 and Ref-1).

## Claims

1. A dry cementitious composition, especially a thermally conductive dry cementitious composition, comprising at least one type of metal powder and at least one type of carbonaceous particles.

2. The dry cementitious composition according to claim 1, wherein the metal powder is selected from iron powder, aluminum powder, copper powder, nickel powder and/ or zinc powder.

3. The dry cementitious composition according to claim 1 or 2, wherein the carbonaceous particles are selected from graphene, graphite, graphene oxide, carbon fibers, carbon black, expanded graphite and/ or activated carbon.

4. The dry cementitious composition according to any of preceding claims, wherein the metal powder is iron powder, and wherein the carbonaceous particle is carbon fiber and/ or graphene oxide.

5. The dry cementitious composition according to any of preceding claims, wherein the metal powder is present in the amount between 1.5 and 5 wt. %, preferably between 2.5 and 5 wt. %, especially between 4 and 5 wt. %, relative to the total weight of the cementitious composition.

6. The dry cementitious composition according to any of preceding claims, wherein the carbonaceous particle is present in the amount between 0.03 and 2.5 wt. %, preferably between 0.03 and 1.5 wt. %, especially between 0.03 and 0.2 wt. %, relative to the total weight of the cementitious composition.

7. The dry cementitious composition according to any of preceding claims, wherein the metal powder has a BET surface area in the range of 0.1 - 5 m²/g, preferably 0.1 - 3 m²/g, more preferably 0.1 - 2 m²/g, measured according to the standard ISO 9277:2022.

8. The dry cementitious composition according to any of the preceding claims, wherein the carbonaceous particles are carbon fibers with a length between 1 and 14 mm, preferably between 6 - 12 mm.

9. A wet cementitious composition obtained by mixing the dry cementitious composition according to any of preceding claims with water, wherein water is present in an amount ranging from 5 to 50 wt. %, preferably from 5 to 40 wt. %, most preferably from 5 to 30 wt. %, in each case relative to the total weight of the cementitious composition.

10. A hardened body obtainable by hardening the wet cementitious composition according to claim 9.

11. A structure comprising the hardened body according to claim 10 and an electric heating mat, preferably an electric heating mat with a thermostatic control, said heating mat being placed on the hardened body.

12. A method of increasing thermal conductivity of a cured cementitious material, said method comprising the steps of
(i) providing a dry cementitious composition,
(ii) adding at least one type of metal powder and at least one type of carbonaceous particles to the dry cementitious composition, and
(iii) curing the mix obtained in step (ii) by the addition of water to obtain a cured cementitious material.

13. The method according to claim 12, wherein the cured cementitious material forms a driveway, a pavement, a patio, an outdoor deck, exterior steps, an exterior staircase, an exterior parking lot, a bridge deck, an overpass and/ or indoor flooring.

14. The method according to claim 12 or 13, wherein the compressive strength of the cementitious material measured at 28 days is at least 13.5 MPa, preferably at least 14.0 MPa, measured according to ASTM C109/C109M-20 standard.
